# EUROPEAN PATENT APPLICATION

(11) **EP 1 645 195 A1**
(43) Date of publication of application: **12.04.2006**
(21) Application number: 04023688.7
(22) Date of filing: 05.10.2004
(51) Int. Cl.: A23K 1/165, A23L 1/03, A21D 8/04, C11D 1/62, C11D 1/75, C12N 9/16, C12N 9/24

(54) **Stabilized enzyme formulations**

(71) Applicant: BASF Aktiengesellschaft, 67056 Ludwigshafen (DE)
(72) Inventor: Betz, Roland Dr., 67150 Niederkirchen (DE); Braun, Jörg Dr., 76879 Essingen (DE); Freyer, Stephan Dr., 67434 Neustadt (DE); Höffken, Hans Wolfgang Dr., 67069 Ludwigshafen (DE); Scholten, Edzard Dr., 68159 Mannheim (DE); Zelder, Oskar Dr., 67346 Speyer (DE); Lohscheidt, Markus Dr., 69121 Heidelberg (DE)

(57) **Abstract**

The present invention concerns stabilized solid or liquid enzyme formulation comprising at least one enzyme and at least one stabilizing agent selected from the group consisting of
N-alkyl-trialkyl/aryl-ammonium salts of formula (I),

(I) [(R₁)₃-N⁺-(CₙH₂ₙ₊₁)] X⁻

wherein X is Cl, Br or I; R₁ are independent of each other methyl, ethyl, propyl, i-propyl, butyl, phenyl or benzyl; and n is an integer from 1 to 22.
amine oxide surfactant of formula (II),

(II) CH₃-(CH₂)ₘ-N(CH₃)₂=O

wherein m = 5 to 21,
N-dodecyl-N,N-dimethyl-3-ammonium-1-propansulfonate, and mixtures thereof.

## Description

The present invention relates to solid or liquid enzyme formulations having an increased stability, preferably thermo stability, which is obtained by the addition of stabilizing agents.

For feed application a stable, preferably thermostable, enzyme is of general interest in order to avoid problems that may occur during the formulation (e.g. spray drying, granulation) and feed treatment processes (e.g. pelleting, extrusion, expansion) where temporarily high temperatures (up to 80-120°C), moisture and shear stress may affect the protein structure and lead to an undesired loss of activity.

Enzymes are generally added to feed and food preparations for various reasons. In food applications enzymes are added for example in baking or brewery. The function of enzymes in feed application is often to improve the feed conversion rate, e.g. by reducing the viscosity or by reducing the anti-nutritional effect of certain feed compounds. Feed enzymes can also be used, such as to reduce the amount of compounds which are harmful to the environment in the manure

In all the various applications, enzymes are often exposed to thermal challenge, e.g. heat, moisture or temperature exposure, which can lead to a partial or complete inactivation of the enzyme.

Although a large amount of phosphate is present in feed in form of phytate phosphorus, monogastric animals, like pigs and poultry, lack the ability to use this form of phosphate. The alkali or earth alkali salts of phytic acid occur naturally mainly in cereals. Since monogastric animals are not able to use this form of phosphate it is common practice to add inorganic phosphates to animal feed.

On the other hand an enzyme called phytase (myo-inositol hexakisphosphate phos-phohydrolase) is known to occur in plants and in some micro organisms. Since phytase can be produced by fermentation it is known in the art to use phytase as an animal feed additive in order to enhance the nutritive value of plant material by liberation of inorganic phosphate from phytic acid (myo-inositol hexakisphosphate). By adding phytase to the animal feed the level of phosphorus pollution of the environment can be reduced since the animal is able to make use of the phosphate liberated from phytate by the use of phytase.

The international patent application WO 93/16175 (EP 626 010) of Gist-Brocades describes stabilized liquid formulations of phytase. It is suggested to use as stabilizing agent urea and a water-soluble polyol whereby sorbitol, glycerol and polyethylene glycol having a molecular weight of 6000 are mentioned.

The European patent application EP-A1 0 969 089 of Hoffmann-La Roche describes stabilized enzyme formulation comprising phytase and at least one stabilizing agent selected from the group consisting of a) polyols containing five carbon atoms, preferably C5 sugars, more preferably xylitol or ribitol, b) polyethylene glycol having a molecular weight of 600 to 4000 Da, c) the disodium salts of malonic, glutaric and succinic acid, d) carboxymethylcellulose, and e) sodium alginate. It furthermore describes stabilizing phytase formulation by cross-linking either by chemical reactions with glutaraldehyde; or by b) oxidation with sodium periodate and subsequent addition of adipic acid dihydrazide.

WO 98/54980 describes phytase containing granules and WO 98/55599 describe high-activity phytase liquids and feed preparation containing them.

EP 0 758 018 describes salt-stabilized enzyme preparations, wherein the enzyme is stabilized by the addition of a inorganic salt, like zinc-, magnesium- and/or calcium sulphate.

It is an object of the present invention to provide alternative stabilizing agents as well as to improve the stability, preferably thermo stability of enzymes whereby stability is defined as the ability to retain activity under various conditions. This stability aspect relates to the entire life cycle of the enzyme, which comprises production (fermentation, downstream processing and formulation), distribution (transport and storage) and final application (production and storage of feed and/or food). For a commercially interesting enzyme, e.g. for example for phytase, it is important to withstand the high temperatures and high moisture reached during various feed and/or food treatment processes like pelleting, extrusion and expansion (up to 80-120°C) and to be stable during storage after addition to the feed and/or food, especially during long term storage. It is a further object of the invention to provide alternative stabilizers, which can be used in a smaller amount than those stabilizers known in the art, as the amount of stabilizer in the final formulations limits the further ingredients that can be added to an enzyme containing formulation. It is a further object of the invention to provide stabilizers that can be used especially for enzyme mixtures. If an enzyme preparation is prepared from more than one fermentation broth, the amount of stabilizer that can be added to the final formulation is limited. This is of special concern if a high enzyme concentration is desired in the final product and thus the amount of diluent that can be added to the final formulation is limited. In a further aspect of the invention, if an enzyme mixture is used, the stabilizer should also preferably stabilize not only one enzyme, but all enzymes in the mixture.

The term "stability" as used in the present invention relates to all specifications of an industrial enzyme, which comprise aspects such as activity, specificity, shelf-life stability, mechanical stability, microbial stability, toxicity, chemical composition and physical parameters such as density, viscosity, hygroscopy, but also colour, odour and dust. A preferred aspect of the present invention relates to the stability of an enzyme, preferably a phytase and/or a glycosidase against thermal inactivation during formulation and feed and/or food treatment processes such as pelleting, extrusion and expansion.

A major barrier to the wide use of enzymes, especially phytases, xylanases and endo-glucanases is the constraint of thermal stability (80-120°C) required for these enzymes to withstand inactivation during feed and/or food treatment processes. Most of the currently available industrial enzymes for feed and/or food applications have an insufficient intrinsic resistance to heat inactivation. As an alternative or in addition to molecular biological approaches the present invention enhances the stability, preferably thermostability of an enzyme by the addition of different additives.

The present invention discloses the use of different additives, which act as stabilizing agent on the stability, preferably thermo stability of the enzyme.

The terms "enzyme" "enzyme(s)" and "enzymes" as used herein include single enzymes as well as mixtures of different enzymes (e.g. a phytase and a xylanase) as well as mixtures of the same enzyme of different origin (e.g. a fungal phytase and a bacterial phytase).

Preferred enzymes for the formulations of the present invention include those enzymes useful in food (including baking) and feed industries.

Such enzymes include but are not limited to proteases (bacterial, fungal, acid, neutral or alkaline), preferably with a neutral and/or acidic pH optimum.

Such enzymes include but are not limited to lipases (fungal, bacterial, mammalian), preferably phospholipases such as the mammalian pancreatic phospholipases A2 or any triacylglycerol lipase (E.C. 3.1.1.3).

Such enzymes include but are not limited to glycosidase (E.C. 3.2, also know as carbohydrases), e.g. amylases (alpha or beta), cellulases (whole cellulase or functional components thereof,), in particular xylanases, endo-glucanases, galactosidases, pecti-nases, and β-galactosidases.

Such enzymes include but are not limited to phosphatases, such as phytases (both 3-phytases and 6-phytases) and/or acid phosphatases

Such enzymes include but are not limited to glucose oxidases.

The protease (proteolytic enzyme) may be a microbial enzyme, preferably a protease derived from a bacterial or a fungal strain or the protease may be trypsin or pepsin. In a preferred embodiment, the proteolytic enzyme is a bacterial protease derived from a strain of Bacillus, preferably a strain of Bacillus subtilis or a strain of Bacillus licheni-formis. Commercially available Bacillus proteases are Alcase™ and Neutrase™ (Novozymes, Denmark). In another preferred embodiment, the proteolytic enzyme is a fungal protease derived from a strain of Aspergillus, preferably a strain of Aspergillus aculeatus, a strain of Aspergillus niger, a strain of Aspergillus oryzae. A commercially available Aspergillus protease is Flavourzyme™ (Novozymes, Denmark).

The glycosidase enzyme may be any glycosidase enzyme (EC 3.2.1, also known as carbohydrases). Preferably, the glycosidase enzyme is an amylase, in particular an α-amylase or a β-amylase, a cellulase, in particular an endo-1,4-ß-glucanase (E.C. 3.2.1.4) or an endo-1,3-β-glucanase (E.C. 3.2.1.6), a xylanase, in particular an endo-1,4-β-glucanase (E.C. 3.2.1.8) or a xylan-endo-1,3-β-xylosidase (E.C. 3.2.1.32), an α-galactosidase (E.C. 3.2.1.22), a polygalacturonase (E.C.3.2.1.15), also known as pect-inase), a cellulose-1,4-β-cellobiosidase (E.C. 3.2.1.91), also known as cellobiohy-drolases), an endoglucanase, in particular an endo-1,6-δ-glucanase (E.C. 3.2.1.75), an endo-1,2-β-glucanase (E.C. 3.2.1.71), an endo-1,3-β-glucanase (E.C. 3.2.1.39) or an endo-1,3-α-glucanase (E.C. 3.2.1.59).

A preferred endo-1,4-ß-glucanase (E.C. 3.2.1.4) according to this invention is the endo-1 ,4-β-glucanase described in WO 01/70998 (BASF AG), which is hereby incorporated by reference.

In a preferred embodiment of the invention the enzyme is at least one xylanase. Xylanases can be obtained from microbial source, e.g. such as Aspergillus niger, Clostrid-ium thermocellum, Trichoderma reesei, Penicillium janthinellum, as well as species of Bacillus and Streptomyces. The xylanase can also be obtained by recombinant expression e.g. as described in EP 121 138. In a preferred embodiment a xylanase as described in EP 0 463 706 B1 (BASF AG) and/or in WO 02/24926 A1 (BASF AG) can used according to the invention.

Xylanases suitable according to the invention can be endo-xylanases and/or exo-xylanases.

Suitable enzyme(s) are those to be included in animal feed which includes pet food and/or in human nutrition. The function of these enzymes is often to improve the feed conversion rate, e.g. by reducing the viscosity or by reducing the anti-nutritional effect of certain feed compounds. Feed enzymes can also be used, such as to reduce the amount of compounds which are harmful to the environment in the manure.

When the enzyme formulations of the present invention are to be used in food applications, the enzyme must be food quality.

It is within the scope of the invention that at least one, preferably two, preferably three or more different enzymes are used. These can be enzymes from the same class, e.g. two different phytases or enzymes from different classes, e.g. a phytase and a xylanase. It is to be understood that whenever referred to the enzyme or an enzyme, also mixtures of enzymes are included in these terms, irrespective of whether such mixtures are obtainable directly in a single fermentation or by mixing enzymes obtainable in different fermentations; and further including enzymes obtainable by fermentation of recombinant organisms.

In a preferred embodiment the enzyme is selected from the group consisting of phytases, xylanases, and endo-glucanases and mixtures thereof.

In a preferred embodiment the enzyme is at least one phytase.

The term "phytase" means not only naturally occurring phytase enzymes, but any enzyme that possess phytase activity, for example the ability to catalyse the reaction involving the removal or liberation of inorganic phosphorous (phosphate) from myo-inositol phosphates. Preferably the phytase will belong to the class EC 3.1.3.8. The phytase can be a 3-phytase and/or a 6-phytase.

One unit of phytase activity (= FTU) is defined as the amount of enzyme which liberates 1 micromol of inorganic phosphorous per minute from 0.0051 mol/l of sodium phytate at ph 5.5 and 37 °C.

The analytical method is based on the liberation of inorganic phosphate from sodium phytate added in excess. The incubation time at pH 5.5 and 37 °C is 60 min. The phosphate liberated is determined via a yellow molybdenium-vanadium complex and evaluated photometrically at a wavelength of 415 nm. A phytase standard of known activity is run in parallel for comparison. The measured increase in absorbance on the product sample is expressed as a ratio to the standard (relative method, the official AOAC method).

The phytase activity can be determined according to "Determination of Phytase Activity in Feed by a Colorimetric Enzymatic Method": Collaborative Interlaboratory Study Engelen et all.: Journal of AOAC International Vol.84, No. 3, 2001.

The phytase according to the invention can be of microbial origin and/or it can be obtained by genetic modification of naturally occurring phytases and/or by de-novo construction (genetic engineering).

In a preferred embodiment the phytase is a plant phytase, a fungal phytase, a bacterial phytase or a phytase producible by a yeast.

Phytases are preferably derived from a microbial source such as bacteria, fungi and yeasts, but may also be of plant origin. In a preferred embodiment, the phytase is derived from a fungal strain, in particular a strain of Aspergillus, e.g. Aspergillus niger, Aspergillus oryzae, Aspergillus ficuum, Aspergillus awamori, Aspergillus fumigatus, Aspergillus nidulans and Aspergillus terreus. Most preferred is a phytase derived from a strain of Aspergillus niger or a strain of Aspergillus oryzae.

In another preferred embodiment, the phytase is derived from a bacterial strain, in particular a strain of Bacillus or a strain of Pseudomonas. Preferably the phytase enzyme is derived from a strain of Bacillus subtilis.

In another preferred embodiment, the phytase is derived from a bacterial strain, in particular a strain of E. coli.

In yet another preferred embodiment, the phytase is derived from a yeast, in particular a strain of Kluveromyces or a strain of Saccharomyces. Preferably the phytase is derived from a strain of Saccharomyces cerevisiae.

In the context of this Invention "an enzyme derived from" encompasses an enzyme naturally produced by the particular strain, either recovered from that strain or encoded by a DNA sequence isolated from this strain and produced in a host organism transformed with said DNA sequence.

The phytase may be derived from the microorganism in question by use of any suitable technique. In particular, the phytase enzyme may be obtained by fermentation of a phytase-producing microorganism in a suitable nutrient medium, followed by isolation of the enzyme by methods known in the art.

The broth or medium used for culturing may be any conventional medium suitable for growing the host cell in question, and may be composed according to the principles of the prior art. The medium preferably contains carbon and nitrogen sources and other inorganic salts. Suitable media, e.g. minimal or complex media, are available from commercial suppliers, or may be prepared according to published receipts, e.g. the American Type Culture Collection (ATCC) Catalogue of strains.

After cultivation, the phytase enzyme is recovered by conventional method for isolation and purification proteins from a culture broth. Well known purification procedures include separating the cells from the medium by centrifugation or filtration, precipitating proteinaceous components of the medium by means of a salt such as ammonium sulphate, and chromatographic methods such as e.g. ion exchange chromatography, gel filtration chromatography, affinity chromatography, etc.

Alternatively, the phytase enzyme is preferably produced in larger quantities using recombinant DNA techniques, e.g. as described in EP-A1 -0 420 358, which publication is hereby incorporated by reference.

Preferably, a fungus of the species Aspergillus which has been transformed with the phytase-encoding gene obtained from the species Aspergillus ficuum or Aspergillus niger, is cultured under conditions conducive to the expression of the phytase-encoding gene as described in EP-A1-0 420 358.

The phytase-containing fermentation broth is preferably treated by means of both filtration and ultra-filtration prior to being used in the formulation of the present invention.

In a further preferred embodiment of the invention, phytases derived by molecular engineering are used, e.g. genetically modified phytases as described in WO 94/03072 (Röhm), in WO 99/49022 (Novozymes), in WO 00/43503 (Novozymes) or in WO 03/102174 (BASF AG).

Another phytase preferably used in this invention is the so-called consensus phytase. This is a phytase developed according to a theoretical molecular biological approach, which has a higher intrinsic stability compared with Aspergillus phytases, see European Patent Application Publication No. 897 985. In the practice of the present invention the consensus phytases specifically described in examples 3 - 13 can also be used.

It is also possible to produce such phytases by genetic engineering whereby the gene obtained from a fungus is transferred to a host organism like a bacterium (e.g. E. coli), a yeast or another fungus, for further details, see e.g. European Patent Application Publication No. 68431 3 and European Patent Application Publication No. 897 010.

In a preferred embodiment of the present invention a phytase according to EP-B1 420 358 can be used.

The terms "stabilizing agent", "stabilizing agent(s) or stabilizing agents" used throughout the description of the invention encompass a single stabilizing agent as well as mixtures of 2 or more stabilizing agents.

In one embodiment of the present invention the enzyme formulation comprises as stabilizing agent at least one N-alkyl-trialkyl/aryl-ammonium salt of formula (I):

(I) [(R₁)₃-N⁺-(CₙH₂ₙ₊₁)] X⁻

wherein X is Cl, Br or I, R₁ are independent of each other methyl, ethyl, propyl, i-propyl, butyl, phenyl or benzyl and n is an integer from 1 to 22.

In a preferred embodiment n is an integer from 8 to 18, preferably 10 to 16, preferably 12 to 16.

Preferred N-alkyl-trialkyl/aryl-ammonium salt are N-alkyl-trimethyl-ammonium salts of formula (Ia)

(Ia) [(CH₃)₃-N⁺-(CₙH₂ₙ₊₁)] X⁻

wherein X is Cl, Br or I and n is an integer from 1 to 22.

In a preferred embodiment n is an integer from 8 to 18, preferably 10 to 16, preferably 12 to 16.

Of the N-alkyl-trimethyl-ammonium bromides, the following are especially preferred:
N-hexadecyl-trimethyl-ammonium bromide (n= 16), abbreviated as CTAB or HTAB
N-tetradecyl-trimethyl-ammonium bromide (n= 14), abbreviated as TTAB
N-docdecyl-trimethyl-ammonium bromide (n=12), abbreviated as DTAB

Of the N-alkyl-trimethyl-ammonium chlorides, the following are especially preferred
N-hexadecyl-trimethyl-ammonium chloride (n= 16), abbreviated as CTAC
N-tetradecyl-trimethyl-ammonium chloride (n= 14), abbreviated as TTAC
N-docdecyl-trimethyl-ammonium chloride (n=12), abbreviated as DTAC

Suitable N-alkyl-trialkyl/aryl-ammonium salts are N-alkyl-dimethyl-ethyl-ammonium salts of the formula (lb):

(lb) [(CH₃)₂(CH₃CH₂)-N⁺ -(CₙH₂ₙ₊₁)] X⁻

wherein X is Cl, Br or I and n is an integer from 1 to 22

Of the N-alkyl-dimethyl-ethyl-ammonium bromides, the following are especially preferred:
N-hexadecyl-dimethyl-ethyl-ammonium bromide (n= 16), abbreviated as CDAB.
N-tetradecyl-dimethyl-ethyl-ammonium bromide (n= 14)
N-docdecyl-diimethyl-ethyl-ammonium bromide (n=12)

Of the N-alkyl-dimethyl-ethyl-ammonium chlorides, the following are especially preferred:
N-hexadecyl-dimethyl-ethyl-ammonium chloride (n= 16),
N-tetradecyl-dimethyl-ethyl-ammonium chloride (n= 14) N-docdecyl-diimethyl-ethyl-ammonium chloride (n=12)

Suitable N-alkyl-trialkyl/aryl-ammonium salts are N-alkyl-trialkyl/aryl-ammonium salts of formula (I),

(I) [(R₁)₃-N⁺-(CₙH₂ₙ₊₁)] X⁻

wherein X is Cl, Br or I, preferably Cl,
wherein at least one R₁ is an aryl residue selected from phenyl or benzyl,
wherein the other R₁ are independent of each other an alkyl-residue with C1 to C4, and n is an integer from 1 to 22.

Especially preferred are N-alkyl-dialkyl-aryl-ammonium salts of formula (I), especially N-alkyl-dialkyl-benzyl-ammonium salts of formula (I).

Examples of such substances are benzalkonium chloride (CAS RN: 8001-54-5), wherein one R₁ is benzyl, the two remaining R₁ are methyl, X is Cl, n is 8 to 18.

Preferred benzalkonium chlorides are cetalkonium chlorides (CAS RN: 122-18-9), wherein one R₁ benzyl, the remaining two R₁ are, X is Cl, n is 16, or Stearalkonium Chloride (CAS 122-19-0), wherein R₁ is Methyl, R₁ is methyl, R₁ is benzyl, X is Cl, n is 18,

The N-alkyl-trialkyl/aryl-ammonium salts can be used in solid as well as in liquid formulations. They are preferably used in an amount of 0.0001 to 50 weight-%, preferably 0.001 to 30 weight-%, especially 0.001 to 10, preferred 0.001 to 3 weight-% calculated on the weight of the final formulation. In an embodiment of the present invention the N-alkyl-trialkyl/aryl-ammonium salts are preferably used in an amount of 0.001 to 2, especially 0.001 to 1, more preferred 0.01 to 0.5 weight-%.

In one embodiment of the present invention the enzyme formulation comprises at least one N-alkyl-trialkyl/aryl-ammonium salt. It is further contemplated that the enzyme formulation of the present invention comprise mixtures of N-alkyl-trialkyl/aryl-ammonium salts, e.g. a mixture of N-hexadecyl-trimethyl-ammonium bromide (CTAB) and N-hexadecyl-dimethyl-ethyl-ammonium bromide (CDAB) or the like.

In one embodiment of the present invention, the enzyme formulation comprises as stabilizing agent at least one amine oxide surfactant of formula (II).

(II) CH₃-(CH₂)ₘ-N(CH₃)₂=O

wherein m is 5 to 21, preferably m is 7 to 19, especially m is 9 to 17, especially m is 11 to 17.

Specific examples of a surfactant covered by the above formula are lauryl dimethylamine oxide (m= 11; N,N,-dimethyl-dodecyl-amine-N-oxide), stearyl dimethylamine oxide (m = 17; N,N,-dimethyl-octadecyl-amine-N-oxide), myristyl dimethyl amine oxide (m=13; N,N,-dimethyl-tetradecyl-amine-N-oxide), cetyl dimethyl amine oxide (m=15, N,N-dimethyl-hexacetyl-amine-N-oxide), and mixtures thereof. The preferred surfactant of this group is lauryl dimethylamine oxide (=N,N-dimethyldodecylamin-N-oxide =LDAO).

The amine oxide surfactant can be used in solid as well as in liquid formulations. It is preferably used in an amount of 0.0001 to 50 weight-%, preferably 0.001 to 30 weight-%, especially 0.001 to 10, preferred 0.001 to 3 weight-% calculated on the weight of the final formulation.

In an embodiment of the present invention the amine oxide surfactants are preferably used in an amount of 0.001 to 2, especially 0.001 to 1, more preferred 0.01 to 0.5 weight-%.

In one embodiment of the present invention the enzyme formulation comprises at least one amine oxide surfactant, it is further contemplated that the enzyme formulations of the present invention comprise mixtures of amine oxide surfactants.

In a further embodiment of the invention the enzyme formulation comprise at least one N-alkyl-trialkyl/aryl-ammonium salt and at least one amine oxide surfactant, e.g. a mixture of N-hexadecyl-trimethyl-ammonium bromide (CTAB) and N,N-dimethyldodecylamin-N-oxide (LDAO) or the like.

In a further embodiment of the invention the enzyme formulation comprises as stabilizing agent N-dodecyl-N,N-dimethyl-3-ammonium-1-propansulfonate.

In a further embodiment of the invention the enzyme formulation comprise at least one N-alkyl-trialkyl/aryl-ammonium salt and at least one amine oxide surfactant and N-dodecyl-N,N-dimethyl-3-ammonium-1-propansulfonate , e.g. a mixture of N-hexadecyl-trimethyl-ammonium bromide (CTAB) and N,N-dimethyldodecylamin-N-oxide (LDAO) or the like.

The term "enzyme formulation" comprises all liquid and solid formulations in which the enzyme(s) may be commercialised. Preferably, the source of enzyme(s) for such a formulation is a rather raw, liquid preparation obtained from the fermentation broth. For the preparation of a liquid enzyme formulation according to the invention the selected stabilizing agents can be added directly to the fermentation broth or the fermentation broth can be purified, e.g. by filtration or ultrafiltration and the stabilising agent is then added after the filtration steps.

To obtain a stabilized, preferably thermo stabilized solid formulation the enzyme(s) can be spray-dried or granulated in the presence of the selected stabilizing agents. A solid formulation is preferably a formulation, which contains less than 15 % (w/w), preferably less than 10 % (w/w), especially less than 8 % (w/w) of water.

In a preferred embodiment of the present invention the solid formulation is a granule(s).

The terms "granules" or "granule(s)" used throughout the description of the invention, both terms encompassing a single granule as well as a plurality of granules without distinction.

In a further aspect of the present invention there is provided a granule(s) comprising at least one enzyme, a solid carrier which comprises at least 15% (w/w) of an edible carbohydrate polymer, and at least one stabilizing agent selected from
N-alkyl-trialkyl/aryl-ammonium salts of formula (I),

(I) [(R₁)₃-N⁺-(CₙH₂ₙ₊₁)] X⁻

wherein X is Cl, Br or I; R₁ are independent of each other methyl, ethyl, propyl, i-propyl, butyl, phenyl or benzyl; and n is an integer from 1 to 22.
amine oxide surfactant of formula (II),

(II) CH₃-(CH₂)ₘ-N(CH₃)₂=O

wherein m = 5 to 21,
N-dodecyl-N,N-dimethyl-3-ammonium-1-propansulfonate,
and mixtures thereof.

At least 15% (w/w) of the solid carrier is comprised of an edible carbohydrate polymer Preferably, however, at least 30% (w/w) of the solid carrier comprises the carbohydrate, optimally at least 40% (w/w). Advantageously the major component of the solid carrier is the carbohydrate (e.g. starch), for example more than 50% (w/w), preferably at least 60% (w/w), suitably at least 70% (w/w), and optimally at least 80% (w/w). These weight percentages are based on the total weight of the non-enzymatic components in the final dry granulate.

The edible carbohydrate polymer should be chosen so that it is edible by the animal or human for whom the feed or food, respectively is intended, and preferably digestible as well. The polymer preferably comprises glucose (e.g. a glucose-containing polymer), or (C₆H₁₀O₅)ₙ, units. Preferably the carbohydrate polymer comprises α-D-glucopyranose units, amylose (a linear (1->4) α-D-glucan polymer) and/or amylopectin (a branched D-glucan with α-D-(1->4) and α-D-(1->6) linkages). Starch is the preferred carbohydrate polymer. Other suitable glucose-containing polymers that can be used instead of, or in addition to starch, include α-glucans, β-glucans, pectin (such as proto-pectin), and glycogen. Derivatives of these carbohydrate polymers, such as ethers and/or esters thereof, are also contemplated. Suitably the carbohydrate polymer is water-insoluble.

Suitable carbohydrate polymers are corn-, potato- and rice-starch. However, starch obtained from other (e.g. plant, such as vegetable or crop) sources such as tapioca, cassava, wheat, maize, sago, rye, oat, barley, yam, sorghum, or arrowroot is equally applicable. Similarly both native or modified (e.g. dextrin) types of starch can be used in the invention. Preferably the carbohydrate (e.g. starch) contains little or no protein, e.g. less than 5% (w/w), such as less than 2% (w/w) preferably less than 1% (w/w). Regardless of the type of starch (or other carbohydrate polymer) it should be in a form that allows it to be used in an animal feed, in other words an edible or digestible form.

Another aspect of the present invention concerns the use of the listed stabilizers as additives for the production of solid and/or liquid phytase formulations. In this embodiment of the present invention the stabilizers are preferably added as solid compounds to a standard granulation mixture. Such formulation can result in an increased recovery (up to 20%) of phytase activity determined after a high shear granulation process which included a drying step of the granulates on a fluid bed dryer at 45°C for 15 min. In addition such granulates which contain the stabilizing agent(s) according to the invention can show, when mixed with feed and/or food, an increased recovery of enzymatic activity after the feed and/or food treatment (e.g. a pelleting process at 85°C) compared to granulates without such additives.

In a further embodiment of the present invention there is provided a process for the preparation of enzyme-containing granule(s), the process comprising processing at least one enzyme, a solid carrier which comprises at least 15% (w/w) of an edible carbohydrate polymer, and at least one stabilizing agent, wherein the stabilizing agent is selected from the group consisting of
N-alkyl-trialkyl/aryl-ammonium salts of formula (I),

(I) [(R₁)₃-N⁺-(CnH₂ₙ₊₁)] X⁻

wherein X is Cl, Br or I; R₁ are independent of each other methyl, ethyl, propyl, i-propyl, butyl, phenyl or benzyl; and n is an integer from 1 to 22.
amine oxide surfactant of formula (II),

(II) CH₃-(CH₂)ₘ-N(CH₃)₂=O

wherein m = 5 to 21,
N-dodecyl-N,N-dimethyl-3-ammonium-1-propansulfonate,
and mixtures thereof.

Water may be added to the processing. In a further embodiment of the invention, the granules are dried subsequent to the processing. It is understood that in one embodiment the granules can be dried irrespective of whether water was added to the processing or not.

The enzyme and water are preferably provided as enzyme-containing (preferably aqueous) liquid(s), such as a solution or a slurry, which can be mixed with the solid carrier and allowed to absorb onto the carrier. It is understood that different enzyme-containing (preferably aqueous) liquid(s) can be mixed if a mixture of different enzymes in the final formulation is desired.

During or after the mixing, the enzyme(s)-containing liquid(s) and the carrier are processed into a granule, which can then subsequently be dried. The use of the carbohydrate carrier may allow the absorption of large amounts of enzyme(s)-containing liquid (and therefore enzyme). The mixture may be used to form a plastic paste or non-elastic dough that can readily be processed into granules, for example it can be extruded.

In the process of the invention the enzyme and water may be present in the same composition before contacting the solid carrier. In this respect, one may provide an enzyme-containing aqueous liquid. This liquid may be a solution or slurry that is from, or derived from, a fermentation process. This fermentation process will usually be one in which the enzyme is produced. The fermentation process may result in a broth that contains the microorganisms (which produce the enzyme) and an aqueous solution. This aqueous solution once separated from the microorganisms (for example, by filtration) can be the enzyme -containing aqueous liquid used in the invention. Thus in a preferred embodiment the enzyme-containing aqueous liquid is a filtrate, especially a filtrate derived from a fermentation process resulting in production of an enzyme. In one embodiment of the invention the stabilizing agent(s) according to the invention can be added to this liquid.

The amount of enzyme-containing liquid (and so enzyme) that can be absorbed onto the carrier is usually limited by the amount of water that can be absorbed. Preferably the amount of liquid added to the solid carrier is such that (substantially) all the water in the (aqueous) liquid is absorbed by the carbohydrate present in the solid carrier.

At elevated temperatures starch and other carbohydrate polymers can absorb much larger amounts of water under swelling. For this reason the carbohydrate polymer is desirably able to absorb water (or enzyme-containing aqueous liquids). For example, corn starch can absorb up to three times its weight of water at 60°C and up to ten times at 70°C. The use of higher temperatures in order to absorb a greater amount enzyme-containing liquid is thus contemplated by the present invention, and indeed is preferable especially when dealing with thermostable enzymes. For these enzymes therefore the mixing of the solid carrier and liquid (or enzyme and water) and stabilizer can be conducted at elevated temperatures (e.g. above ambient temperature), such as above 30°C, preferably above 40°C and optimally above 50°C. Alternatively or in addition the liquid may be provided at this temperature.

However, in general, non-swelling conditions at lower (e.g. ambient) temperatures are preferred. This may minimise activity loss arising from instability of (heat sensitive) enzymes at higher temperatures. Suitably the temperature during the mixing of the enzyme and water is from 10 to 60°C, such as 10 to 50°C, preferably 20 to 40°C, preferably 20 to 25°C.

The mechanical processing used in the present invention for making the mixture of the enzyme, optionally water (e.g. an enzyme-containing liquid), the stabilizing agent and the solid carrier into granules (in other words granulating) can employ known techniques frequently used in food, feed and enzyme formulation processes. This may comprise expansion, extrusion, spheronisation, pelleting, high shear granulation, drum granulation, fluid bed agglomeration or a combination thereof. These processes are usually characterised by an input of mechanical energy, such as the drive of a screw, the rotation of a mixing mechanism, the pressure of a rolling mechanism of a pelleting apparatus, the movement of particles by a rotating bottom plate of a fluid bed agglomerator or the movement of the particles by a gas stream, or a combination thereof. These processes allow the solid carrier (e.g. in the form of a powder), to be mixed with the enzyme and optionally water, for example an enzyme-containing liquid (an aqueous solution or slurry), the stabilizer, and so subsequently granulated.

Alternatively the solid carrier can be mixed with the enzyme (e.g. in a powder form) and the stabilizing agent, to which optionally water, such as a liquid (or slurry) can then be added (which can act as granulating liquid).

In yet a further embodiment of the invention the granules (e.g. an agglomerate) is formed by spraying or coating the enzyme-containing liquid onto the carrier, which was previously mixed with the stabilizing agent, such as in a fluid bed agglomerator. Here the resulting granules can include an agglomerate as can be produced in a fluid bed agglomerator.

Preferably the mixing of the enzyme-containing liquid, the solid carrier and the stabilizing agent additionally comprises kneading of the mixture. This may improve the plasticity of the mixture in order to facilitate granulation (e.g. extrusion).

In a preferred embodiment the granulate is formed by extrusion, preferably by extrusion at low pressure. This may offer the advantage that the temperature of the mixture being extruded will not, or only slightly, increase. Low-pressure extrusion includes extrusion for example in a Fuji Paudal basket- or dome- extruder. The extrusion may naturally produce granules (the granules may break off after passage through a die) or a cutter may be employed.

Suitably the granules will have a water content of from 15 to 50%, such as 20 to 40%, such as from 25 to 35, preferably 33 to 37% prior to drying. The enzyme content of the granules is preferably from 1 to 25%, such as 3 to 15, such as 5 to 12% (e.g. at least 50,000 ppm) prior to drying. (Always calculated as weight % based on the total weight of the granule).

The granules obtained can be subjected to rounding off (e.g. spheronisation), such as in a spheromiser, e.g. a MARUMERISER™ machine and/or compaction. If the obtained granules are dried, the spheronisation is preferably conducted prior to drying. The granules can be spheronised prior to drying since this may reduce dust formation in the final granulate and/or may facilitate any coating of the granulate.

The granules can then be dried, such as in a fluid bed drier or, in case of the fluid bed agglomeration, can be immediately dried (in the agglomerator) to obtain (solid) granules. Other known methods for drying granules in the food, feed or enzyme industry can be used by the skilled person. Suitably the granulate is flowable. The drying preferably takes place at a temperature of from 25 to 60°C, such as 30 to 50°C. Here the drying may last from 10 minutes to several hours. The length of time required will of course depend on the amount of granules to be dried.

After drying the granules, the resulting dried granules preferably have a water content of from 3 to 10%, such as from 5 to 9% by weight.

In a preferred embodiment of the invention there is provided a process wherein the process comprises:
a) mixing an aqueous liquid containing at least one enzyme with the solid carrier and the stabilizing agent(s);
b) mechanically processing the mixture obtained in a) to obtain enzyme-containing granules; and
c) drying the enzyme-containing granule(s) obtained in b).

In a further embodiment of the invention the granules are coated. A coating may be applied to the granule to give additional (e.g. favoured) characteristics or properties, like low dust content, colour, protection of the enzyme from the surrounding environment, different enzyme activities in one granulate or a combination thereof. The granules can be coated with or without prior drying. The granules can be coated with a fat, wax, polymer, salt, unguent and/or ointment or a coating (e.g. liquid) containing a (second) enzyme or a combination thereof. It will be apparent that if desired several layers of (different) coatings can be applied. To apply the coating(s) onto the granulates a number of known methods are available which include the use of a fluidised bed, a high shear granulator, a mixer granulator, or a Nauta-mixer.

In one embodiment the granules are coated, preferably after drying, for example to a residual moisture of less than about 10% by weight, with an organic polymer which is suitable for feed- and/or foodstuffs, by
(a) spraying the granules in a fluidized bed with a melt, a solution or a dispersion of the organic polymer or carrying out in a fluidized bed a powder coating with the organic polymer; or
(b) coating the granules in a mixer by melting on the organic polymer, or spraying the crude granulate with a melt, a solution or a dispersion of the organic polymer or carrying out a powder coating with the organic polymer;
and if necessary post-drying, cooling and/or freeing from coarse fractions the respective resultant polymer-coated granules.

According to a preferred embodiment of the process of the invention, the granules are charged into a fluidized bed, fluidized and coated with an aqueous or non-aqueous, preferably aqueous, solution or dispersion of the organic polymer by spraying. For this purpose a liquid which is as highly concentrated as possible and still sprayable is used, for example a from 10 to 50% strength by weight aqueous or non-aqueous solution or dispersion of at least one polymer which is selected from the group consisting of
a) polyalkylene glycols, in particular polyethylene glycols having a number average molecular weight of from about 400 to 15,000, for example from about 400 to 10,000;
b) polyalkylene oxide polymers or copolymers having a number average molecular weight of from about 4000 to 20,000, for example from about 7700 to 14,600; in particular block copolymers of polyoxyethylene and polyoxypropylene;
c) polyvinylpyrrolidone having a number average molecular weight from about 7000 to 1,000,000, for example from about 44,000 to 54,000
d) vinylpyrrolidone/vinylacetate copolymers having a number average molecular weight from about 30,000 to 100,000, for example from about 45,000 to 70,000;
e) polyvinyl alcohol having a number average molecular weight from about 10,000 to 200,000, for example from about 20,000 to 100,000; and
f) hydroxypropyl methyl cellulose having a number average molecular weight from about 6000 to 80,000, for example from about 12,000 to 65,000.

According to a further preferred process variant, for the coating a from 10 to 40% strength by weight, preferably from about 20 to 35% strength by weight, sprayable aqueous or non-aqueous solution or dispersion of at least one polymer which is selected from the group consisting of:
g) alkyl (meth)acrylate polymers and copolymers having a number average molecular weight from about 100,000 to 1,000,000; in particular ethyl acrylate/methyl methacrylate copolymers and methyl acrylate/ethyl acrylate copolymers; and
h) polyvinyl acetate having a number average molecular weight from about 250,000 to 700,000, possibly stabilized with polyvinylpyrrolidone is used.

Generally, preference is given to aqueous solutions or aqueous dispersions for the following reasons: No special measures are necessary for working up or recovering the solvents; no special measures are required for explosion protection; some coating materials are preferentially offered as aqueous solutions or dispersions.

However, in special cases, the use of a non-aqueous solution or dispersion can also be advantageous. The coating material dissolves very readily or an advantageously high proportion of the coating material can be dispersed. In this manner a spray liquid having a high solids content can be sprayed, which leads to shorter process times. The lower enthalpy of evaporation of the non-aqueous solvent also leads to shorter process times.

Dispersions which can be used according to the invention are obtained by dispersing above polymers in an aqueous or non-aqueous, preferably aqueous, liquid phase, with or without a customary dispersant. A polymer solution or dispersion is preferably sprayed in such a manner that the granules are charged into a fluidized-bed apparatus or a mixer and the spray material is sprayed on with simultaneous heating of the charge. The energy is supplied in the fluidized-bed apparatus by contact with heated drying gas, frequently air, and in the mixer by contact with the heated wall and, if appropriate, with heated mixing tools. It may be expedient to preheat the solution or dispersion if as a result spray material can be sprayed with a high dry matter content. When organic liquid phases are used, solvent recovery is expedient. The product temperature during the coating should be in the range of from about 35 to 50°C. The coating can be carried out in the fluidized-bed apparatus in principle in the bottom-spray process (nozzle is in the gas-distributor plate and sprays upwards) or in the top-spray process (coating is sprayed from the top into the fluidized bed).

Examples of suitable polyalkylene glycols a) are: polypropylene glycols, and in particular polyethylene glycols of varying molar mass, for example PEG 4000 or PEG 6000, obtainable from BASF AG under the tradenames Lutrol E 4000 and Lutrol E 6000.

Examples of above polymers b) are: polyethylene oxides and polypropylene oxides, ethylene oxides/propylene oxide mixed polymers and block copolymers made up of polyethylene oxide and polypropylene oxide blocks, for example polymers which are obtainable from BASF AG under the tradenames Lutrol F 68 and Lutrol F127. Of the polymers a) and b), preferably, highly concentrated solutions of from up to about 50% by weight, for example from about 30 to 50% by weight, based on the total weight of the solution, can advantageously be used.

Examples of above polymers c) are: polyvinylpyrrolidones, as are marketed, for example, by BASF AG under the tradenames Kollidon or Luviskol. Of these polymers, highly concentrated solutions having a solids content of from about 30 to 40% by weight, based on the total weight of the solution, can advantageously be used.

An example of abovementioned polymers d) is a vinylpyrrolidone/vinyl acetate copolymer which is marketed by BASF AG under the tradename Kollidon VA64. Highly concentrated solutions of from about 30 to 40% by weight, based on the total weight of the solution, of these copolymers can particularly advantageously be used.

Examples of above polymers e) are: products such as are marketed, for example, by Hoechst under the tradename Mowiol. Solutions of these polymers having a solids content in the range from about 8 to 20% by weight can advantageously be used.

Examples of suitable polymers f) are: hydroxypropylmethyl-celluloses, for example as marketed by Shin Etsu under the tradename Pharmacoat.

Examples of abovementioned polymers g) are: alkyl (meth)acrylate polymers and copolymers whose alkyl group has from 1 to 4 carbon atoms. Specific examples of suitable copolymers are: ethyl acrylate/methyl methacrylate copolymers, which are marketed, for example, under the tradenames Kollicoat EMM 30D by BASF AG or under the tradenames Eutragit NE 30 D by Röhm; also methacrylate/ethyl acrylate copolymers, as are marketed, for example, under the tradenames Kollicoat MAE 30DP by BASF AG or under the tradenames Eutragit 30/55 by Röhm. Copolymers of this type can be processed according to the invention, for example, as from 10 to 40% strength by weight dispersions.

Examples of above polymers h) are: polyvinyl acetate dispersions which are stabilized with polyvinylpyrrolidone and are marketed, for example, under the tradename Kollicoat SR 30D by BASF AG (solids content of the dispersion from about 20 to 30% by weight).

According to a further preferred embodiment of the process of the invention, the granules are charged into a fluidized bed and powder-coated. The powder-coating is preferably carried out using a powder of a solid polymer which is selected from the group consisting of hydroxypropyl methyl celluloses (HPMC) having a number average molecular weight of from about 6000 to 80,000; in a mixture with a plasticizer. Suitable materials for a powder coating are also all other coating materials which can be present in the pulverulent form and can be applied neither as a melt nor as highly concentrated solution (for example the case with HPMC).

The powder coating is preferably carried out in such a manner that the coating material is continuously added to the granules charged into the fluidized bed. The fine particles of the coating material (particle size in the range of from about 10 to 100 *µ*m) lie on the relatively rough surface of the crude granulate. By spraying in a plasticizer solution, the coating material particles are stuck together. Examples of suitable plasticizers are polyethylene glycol solutions, triethyl citrate, sorbitol solutions, paraffin oil and the like. To remove the solvent, the coating is performed with slight heating. The product temperature in this case is below about 60°C, for example from about 40 to 50°C. In principle, the powder coating can also be carried out in a mixer. In this case, the powder mixture is added and the plasticizer is also injected via a nozzle. Drying is performed by supplying energy via the wall of the mixer and if appropriate via the mixing tools. Here also, as in the coating and drying in the fluidized bed, low product temperatures must be maintained.

According to a further preferred embodiment of the process of the invention, the granules are charged into a fluidized bed or mixer are coated using a melt of at least one polymer which is selected from the group consisting of
a) polyalkylene glycols, in particular polyethylene glycols, having a number average molecular weight of from about 1000 to 15,000; and
b) polyalkylene oxide polymers or copolymers having a number average molecular weight of from about 4000 to 20,000, in particular block copolymers of polyoxyethylene and polyoxypropylene.

The melt coating is carried out in a fluidized bed preferably in such a manner that the granulate to be coated is charged into the fluidized-bed apparatus. The coating material is melted in an external reservoir and pumped to the spray nozzle, for example, via a heatable line. Heating the nozzle gas is expedient. Spraying rate and melt inlet temperature must be set in such a manner that the coating material still runs readily on the surface of the granulate and coats this evenly. It is possible to preheat the granulate before the melts are sprayed. In the case of coating materials having a high melting point, attention must be paid to the fact that the product temperature must not be set too high in order to minimize loss of enzyme activity. The product temperature should be in the range of from about 35 to 50°C. The melt coating can also be carried out in principle by the bottom-spray process or by the top-spray process. The melt coating can be carried out in a mixer in two different ways. Either the granulate to be coated is charged into a suitable mixer and a melt of the coating material is sprayed into the mixer, or, in another possibility, the coating material in solid form is to be mixed with the product. By supplying energy via the vessel wall or via the mixing tools, the coating material is melted and thus coats the crude granulate. If required, some release agent can be added from time to time. Suitable release agents are, for example, salicic acid, talcum, stearates and tricalcium phosphate.

The polymer solution, polymer dispersion or polymer melt used for the coating may receive other additions, for example of microcrystalline cellulose, talcum or kaolin.

In another embodiment of the invention the granules can be coated with a polyolefin as described in WO 03/059087, page 2, lines 19 to page 4, line 15.

In another embodiment of the invention the granules can be coated with a dispersion comprising particle of a hydrophobic substance dispersed in a suitable solvent as described in WO 03/059087, page 2, line 18 to page 4 line 8. In a preferred embodiment of this coating, a polyolefin, especially preferred polyethylene and/or polypropylen are used.

In other embodiments additional ingredients can be incorporated into the granulate e.g. as processing aids, for further improvement of the pelleting stability and/or the storage stability of the granulate. A number of such preferred additives are discussed below.

Salts may be included in the granulate, (e.g. with the solid carrier or water). Preferably (as suggested in EP-A-0,758,018) inorganic salt(s) can be added, which may improve the processing and storage stability of the dry enzyme preparation. Preferred inorganic salts are water soluble. They may comprise a divalent cation, such as zinc (in particular), magnesium, and calcium. Sulphate is the most favoured anion although other anions resulting in water solubility can be used. The salts may be added (e.g. to the mixture) in solid form. However, the salt(s) can be dissolved in the water or enzyme-containing liquid prior to mixing with the solid carrier. Suitably the salt is provided at an amount that is at least 15% (w/w based on the enzyme), such as at least 30%. However, it can be as high as at least 60% or even 70% (again, w/w based on the enzyme). These amounts can apply to the granules either before or after drying. The granules may therefore comprise less than 12% (w/w) of the salt, for example from 2.5 to 7.5%, e.g. from 4 to 6%. If the salt is provided in the water then it can be in an amount of from 5 to 30% (w/w), such as 15 to 25%.

Further improvement of the pelleting stability may be obtained by the incorporation of hydrophobic, gel-forming or slow dissolving (e.g. in water) compounds. These may be provided at from 1 to 10%, such as 2 to 8%, and preferably from 4 to 6% by weight (based on the weight of water and solid carrier ingredients). Suitable substances include derivatised celluloses, such as HPMC (hydroxy-propyl-methyl-cellulose), CMC (carboxy-methyl-cellulose), HEC (hydroxy-ethyl-cellulose); polyvinyl alcohols (PVA); and/or edible oils. Edible oils, such as soy oil or canola oil, can be added (e.g. to the mixture to be granulated) as a processing aid.

It is further contemplated that know stabilizing agent(s) can be added to the solid formulations such as urea, glycerol, sorbitol, polyethylene glycol, preferably polyethylene glycole having a molecular weight of 6000 or mixtures thereof. Another example of further stabilizing agent(s) that can be added to the solid formulations are C5 Sugars, preferably xylitol or ribitol, polyethylene glycols having a molecular weight of 600 to 4000 Da, preferably 1000 to 3350 Da., the disodium salts of malonic, glutaric and succinic acid, carboxymethylcellulose, and alginate, preferably sodium alginate

Preferably the granules have a relatively narrow size distribution (e.g. they are monodisperse). This can facilitate a homogeneous distribution of the enzyme in the granules in the animal feed and/of food. The process of the invention tends to produce granulates with a narrow size distribution. However, if necessary, an additional step can be included in the process to further narrow the size distribution of the granules, such as screening. The mean particle size distribution of the granulate is suitably between 100 *µ*m and 2000*µ*m, preferably between 200 *µ*m and 1800 *µ*m, preferably between 300 *µ*m and 1600 *µ*m. The granules may be of irregular (but preferably regular) shape, for example approximately spherical. In a preferred embodiment the granules have a mean particle size distribution between 500 and 2000 *µ*m, preferably between 500 and 1800*µ*m, preferably between 600 and 1000 *µ*m. The mean particle size distribution is determined by using Mastersizer S, a machine of Malvern Instruments GmbH, Serial No., 32734-08. The mean particle size distribution is characterized by the values of D(v,0.1), D(v,0.5) and D(v,0.9) as well as the mean particle size of the distribution D(4,3).

In a preferred embodiement the granulate will comprise at least one phosphatase, preferably at least one phytase. In such an embodiment, the final granulate will preferably have a phytase activity of from 3,000 to 25,000, such as from 5,000 to 15,000, such as 5,000 to 10,000 such as from 6,000 to 8,000, FTU/g.

In a preferred embodiment the final granulate will have an activity of more than 6,000 FTU/g, preferably more than 8,000 FTU/g, especially more than 10,000 FTU/g.

In another aspect of the invention the enzyme formulation of the invention is liquid.

The liquid formulation can be prepared using techniques commonly used in food, feed and enzyme formulation processes. In one embodiment, the stabilizing agent(s) can be added directly to the liquid in which the enzyme is solved or dispersed. In another embodiment of the invention the stabilizing agent(s) is first dissolved in additional water, optionally the pH of the obtained solution can be adjusted and the so obtained solution is subsequently mixed with the enzyme or enzyme concentrate or liquid enzyme preparation. A pH adjustment of the so obtained mixture is optional. The pH can be adjusted with organic or inorganic salts and/or acids.

In a preferred embodiment the liquid formulation comprises phytase. In this embodiment, phytase is preferably present in the liquid formulation with an activity of more than 10,000 FTU/g liquid solution, especially more than 14,000 FTU/g liquid solution.

It is further contemplated that know stabilizing agent(s) can be added to the liquid formulations. Such stabilizing agents are for example salts, as described in EP 0,758,018. These salts may be included in the liquid formulation. Preferably (as suggested in EP-A-0,758,018) inorganic salt(s) can be added. Preferred inorganic salts are water soluble. They may comprise a divalent cation, such as zinc (in particular), magnesium, and calcium. Sulphate is the most favoured anion although other anions resulting in water solubility can be used. The salts may be added (e.g. to the mixture) in solid form. However, the salt(s) can be dissolved in the water or enzyme-containing liquid. Suitably the salt is provided at an amount that is at least 15% (w/w based on the enzyme), such as at least 30%. However, it can be as high as at least 60% or even 70% (again, w/w based on the enzyme).

It is further contemplated that know stabilizing agent(s) can be added to the liquid formulations, such as urea, glycerol, sorbitol, polyethylene glycol, preferably polyethylene glycole having a molecular weight of 6000 or mixtures thereof. Another example of further stabilizing agent(s) that can be added to the liquid formulations are C5 Sugars, preferably xylitol or ribitol, polyethylene glycols having a molecular weight of 600 to 4000 Da, preferably 1000 to 3350 Da., the disodium salts of malonic, glutaric and succinic acid, carboxymethylcellulose, and alginate, preferably sodium alginate.

Another aspect of the present invention concerns methods of preparing feed compositions for monogastric animals, whereby the feed is supplemented with a thermostabi-lized solid or liquid enzyme formulation according to the invention.

The enzyme supplemented feed can be subjected to several methods of feed processing like extrusion, expansion and pelleting, where temporarily high temperatures may occure and thermostabilisation is an advantage.

The stabilized enzyme formulation of the present invention can be applied for example on feed pellets. The thermo-stabilised liquid enzyme formulation may be diluted with tap water to yield a solution having the desired activity of the enzyme. In case the or one of the enzymes is phytase, the solution is preferably diluted so that an activity of 100 to 500, preferably 300 to 500 FTU/g solution is obtained. The feed pellets can be transferred to a mechanical mixer and the diluted enzyme formulation is sprayed onto the feed pellets while being agitated in order to yield a homogeneous product with an added enzyme activity. Examples for phytase containing feed pellets will preferably result in activities of about 500 FTU/kg feed pellets.

Alternatively the solid or liquid enzyme formulation can be directly mixed with the mash feed before this mixture is then subjected to a process such as pelleting, expansion or extrusion.

In a further aspect the present invention concerns a method of providing a monogastric animal with its dietary requirement of phosphorus wherein the animal is fed with a feed according to the present invention and whereby no additional phosphate is added to the feed.

In a further aspect the present invention concerns food composition for human nutrition, characterized in that the food compositions comprises a stabilized solid or liquid enzyme formulation according to any one of claims 1 to 7.

### Examples

### Example 1: Preparation of liquid formulations for testing the stability

For the preparation of the liquid phytase containing formulations, a liquid concentrate obtained from a fermentation of Aspergillus niger phytase was used. The liquid concentrate was diluted with water, sodium benzoate and an aqueous solution of the stabilizing agent to be tested.

Aqueous solutions of the stabilizers were prepared and the pH of these solutions was adjusted to pH = 4.2 before addition to the phytase liquid concentrate solution. If needed the pH was again adjusted after addition of the aqueous solution containing the stabilizing agent.

In the final liquid formulations to be tested, the pH was adjusted to 3.5 to 4.0 with diluted H₃PO₄ or ammonia, the density range of the liquid formulations was 1-15 to 1 -20 kg/l, the viscosity range was 10 to 20 mPa.s.

The final concentration of phytase was 6030,0 FTU/g final liquid formulation, the final concentration of sodium benzoate was 1.0 g/kg final liquid formulation [= 0,1 % w/w]

### Example 2 Determination of phytase activity

One unit of phytase activity (= FTU) is defined as the amount of enzyme which liberates 1 micromol of inorganic phosphorous per minute from 0.0051 mol/I of sodium phytate at ph 5.5 and 37 °C.

The analytical method is based on the liberation of inorganic phosphate from sodium phytate added in excess. The incubation time at pH 5.5 and 37 °C is 60 min. The phosphate liberated is determined via a yellow molybdenium-vanadium complex and evaluated photometrically at a wavelength of 415 nm. A phytase standard of known activity is run in parallel for comparison. The measured increase in absorbance on the product sample is expressed as a ratio to the standard (relative method, the official AOAC method).

### Example 3 Reference samples /Blanc

As reference sample 1 a liquid preparation containing phytase according to example 1 was prepared, instead of an aqueous solution of a stabilizing agent according to the invention, sorbitol was added in such amounts to obtain a final concentration of 41.5 % [w/w]. This corresponds to the product Natuphos™ 5000 L.

As reference sample 2 a liquid preparation containing phytase according to example 1 was prepared, instead of an aqueous solution of a stabilizing agent according to the invention, sorbitol and glycerol were added in such amounts to obtain a final concentration of 21 % [w/w] sorbitol and 26,5 % [w/w] glycerol. This corresponds to the product Natuphos™ 10000 L.

As blanc sample 3 a liquid preparation containing phytase according to example 1 was prepared without the addition of any stabilizer.

### Example 4 Determination of thermo stability

Liquid formulations containing phytase and stabilizing agents prepared according to example 1 and control/blanc samples prepared according to example 2 were stored at 45 °C for 1 week. After this storage time, the phytase activity was determined according to example 3. Results are displayed as Remaining Activity (= % of activity of sample with stabilizing agent as compared to activity of sample without stabilizing agent (=blanc)", see table 1 for the individual results.

### Table 1

Table 1 lists the stabilizing agents tested in the liquid formulations containing phytase as outlined in example 1 and shows the results of the stabilisation test. Table 2 specifies the stabilizing agents and the source from which they were obtained.

**Table 1**

| Stabilizer | Concentration of stabilizing agent [% w/w] | Remaining Activity [%] |
|---|---|---|
| CTAB | 0,04 | 121 |
| LDAO | 0,05 | 122 |
| Reference 1 (sorbitol) | 41,5 | 123 |
| Reference 2 (sorbitol/gylcerol) | 21 / 26,25 | 121 |
| Blanc (without stabilizing agent) | - | 100 |

| | | |
|---|---|---|
| CTAB : N-hexadecyl-trimetyl-ammoniumbromid | | |
| LDAO: N,N-Dimethyldodecylamin-N-oxid | | |

**Table 2**

| Stabilizing agent | Lot /Charge | Supplier |
|---|---|---|
| CTAB | L:+F: 013659/1 25003143 | Fluka |
| LDAO | L:+F: 017083/1 31104270 | Fluka |

## Claims

1. A stabilized solid or liquid enzyme formulation comprising at least one enzyme and at least one stabilizing agent selected from the group consisting of N-alkyl-trialkyl/aryl-ammonium salts of formula (I),
(I) [(R₁)₃-N⁺-(CₙH₂ₙ₊₁)] X⁻
wherein X is Cl, Br or I; R₁ are independent of each other methyl, ethyl, propyl, i-propyl, butyl, phenyl or benzyl; and n is an integer from 1 to 22.
amine oxide surfactant of formula (II),
(II) CH₃-(CH₂)ₘ-N(CH₃)₂=O
wherein m = 5 to 21,
N-dodecyl-N,N-dimethyl-3-ammonium-1-propansulfonate,
and mixtures thereof.

2. Enzyme formulation according to claim 1, wherein the enzyme is selected from the group consisting of phytases and/or glycosidases.

3. Enzyme formulation according to any preceding claim, wherein the enzyme is selected from phytases, xylanases, endo-glucanases and mixtures thereof.

4. Enzyme formulation according to any preceding claim, wherein the enzyme is a phytase, preferable a plant phytase, a fungal phytase, a bacterial phytase, a phytase producible by a yeast or a consensus phytase.

5. Enzyme formulation according to any preceding claim **characterized in that** the formulation is liquid.

6. Enzyme formulation according to any preceding claim, **characterized in that** the formulation is solid.

7. Enzyme formulation according to any preceding claim, **characterized in that** the stabilizing agent is present in a concentration of 0.001 to 50 % (w/w) in the final formulation.

8. A method of preparing a feed composition for monogastric animals, **characterized in that** the feed is treated with a stabilized solid or liquid enzyme formulation according to any of the preceding claims.

9. A feed composition for monogastric animals, **characterized in that** the feed comprises a stabilized solid or liquid enzyme formulation according to any one of claims 1 to 7.

10. A food composition for human nutrition, **characterized in that** the food compositions comprises a stabilized solid or liquid enzyme formulation according to any one of claims 1 to 7.
